Europäisches Patentamt

European Patent Office

Office européen des brevets

(19)

(11) Numéro de publication : **0 498 744 A1**

# (12) DEMANDE DE BREVET EUROPEEN

(21) Numéro de dépôt : **92430002.3**

(22) Date de dépôt : **06.02.92**

(51) Int. Cl.$^5$ : **B60D 1/42,** B62D 13/00, A47L 9/28

(30) Priorité : **08.02.91 FR 9101788**

(43) Date de publication de la demande : **12.08.92 Bulletin 92/33**

(84) Etats contractants désignés :
**BE CH ES GB IT LI**

(71) Demandeur : **ONET Société Anonyme**
**Traverse de Pomègues**
**F-13008 Marseille (FR)**

(72) Inventeur : **Pacchiani, Louis**
**69, Village du Soleil**
**F-13540 Puyricard (FR)**
Inventeur : **Heraud, Jean-Yves**
**Quartier Les Boyers, Les Solans**
**F-13400 Aubagne (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

(54) **Dispositif de liaison pour optimiser la trajectoire d'une remorque attelée derrière un tracteur.**

(57)    Le dispositif de cette invention est un dispositif de liaison entre deux mobiles dont l'un est une remorque (2) attelée à l'autre qui est un tracteur (1) pour optimiser la trajectoire de ladite remorque par rapport audit tracteur. Le dispositif comporte un timon (3) articulé à ses deux extrémités (6,7), relié d'un côté à l'arrière du tracteur (1) et de l'autre côté à l'avant de la remorque (2), celle-ci reposant et roulant sur au moins trois roues (4,5), dont deux ($4_1$ et $4_2$) au plus sont dans des plans fixes parallèles à l'axe (X,X') de la remorque (2) et situées latéralement chacune de chaque côté de celle-ci, et une au moins (5) est montée folle et libre en direction. Dans la présente invention au moins ladite articulation (6) d'extrémité du timon (3) sur le tracteur (1) est montée sur tout moyen (8,12) permettant de modifier volontairement l'angle $\alpha$ que fait le timon (3) avec l'axe (Y,Y') du tracteur (1).

FIG.1

La présente invention a pour objet un dispositif de liaison pour optimiser la trajectoire d'une remorque attelée derrière un tracteur. Le secteur technique de l'invention est le domaine de la construction mécanique et plus particulièrement des attelages de remorques.

Une des applications principales de l'invention est la réalisation de liaisons articulées entre deux véhicules dont l'un au moins est un robot tracteur et le second une remorque porte-outils devant effectuer des tâches spécifiques suivant une trajectoire définie par le robot tracteur, en particulier, et à titre d'exemple, dans le domaine du nettoyage, le robot tracteur peut effectuer une première opération de nettoyage de surface de sols et la remorque des opérations complémentaires de nettoyage sur cette même surface.

On connaît en effet différents types de liaison et d'attelage entre des remorques et des tracteurs dans différentes applications dont les principales sont dans le domaine agricole et celui du transport routier. La liaison la plus connue est celle comportant un point fixe à l'arrière du tracteur et constituant une articulation au moins suivant un axe vertical, sur laquelle est fixée l'extrémité d'un timon ou du châssis lui-même portant la remorque, et solidaire d'un essieu portant deux roues qui sont alors, soit des roues directrices de la remorque pouvant pivoter alors indépendamment par rapport à celle-ci, soit les seules roues porteuses de cette remorque qui pivote alors elle-même d'un seul mouvement d'ensemble. Cette technique d'attelage la plus répandue permet ainsi à la remorque d'être tirée par le tracteur en suivant ses changements de direction, mais il est connu et toutes les démonstrations de trajectographie le prouvent, que la remorque ne suit pas les traces de son tracteur et coupe en général les courbes que peut effectuer ce dernier en passant à l'intérieur de celles-ci et les trajectoires ne se rejoignent qu'après un parcours assez long. Ceci est gênant en cas de manoeuvre dans les zones encombrées et doit être d'autant plus optimisé dans des applications spécifiques, telles que pour robots de nettoyage, citées ci-dessus ; cela est également gênant même pour des zones non encombrées s'il y a plusieurs remorques les unes derrières les autres, car plus la chaîne de remorques est longue, plus la dernière remorque, la plus éloignée du tracteur, lissera la trajectoire de celui-ci ; il en est de même quand les remorques en elles-mêmes sont assez longues, même s'il n'y en a qu'une seule derrière le tracteur.

Certaines solutions, pour permettre un meilleur suivi de courbe, ont été ainsi étudiées et vérifiées : on peut citer par exemple la demande de brevet FR 263 9311 déposée le 28 octobre 1988 par M. D. BOGEAT sur un dispositif à châssis amovible pour le transport routier de charges longues comportant un timon télescopique, articulé à l'arrière du châssis du camion par un crochet d'attelage et articulé également à l'avant de la remorque par une articulation à axe transversal horizontal ; laquelle remorque comporte un châssis porte-charges reposant à ses deux extrémités sur des moyens d'articulation à pivotement libre selon des axes verticaux par rapport à des roues porteuses : la longueur du timon est alors adaptée en fonction des virages à négocier. Cette solution est cependant assez compliquée, car le timon de longueur variable doit pouvoir supporter les efforts de traction, ce qui en complique la réalisation et rend le système lourd et consommateur d'énergie, sans répondre de manière efficace à l'objectif recherché.

Par ailleurs, on relève également la demande de brevet FR 261 6714 déposée le 18 juin 1987 par la société LOHR S.A. sur "un attelage court à géométrie variable à appui d'articulation butée mobile en arc de cercle pour remorques équilibrées ou semi-remorques". Cet attelage comprend d'une part un timon extensible avec un rappel élastique en position d'écartement minimal et d'autre part deux appuis recevant les extrémités de ce timon et monté chacun en trajectoire circulaire autour d'un axe situé sur le camion. Cette solution présente les inconvénients de la solution précédente, car même si le timon n'est pas ici actif, et ne nécessite pas d'alimentation en énergie, il faut tout de même que ses composants élastiques puissent supporter les efforts de tractions ; de plus, la solution de secteurs circulaires laisse rentrer, si les extrémités sont libres, la remorque à l'intérieur du virage, encore plus que dans le cas d'attelage classique, ce qui va à l'inverse du but recherché.

Pour réduire cet effet, mais en conservant la même idée de couronne de rotation et de pivotement avec glissement de timon, on relève la demande allemande DE 33 12 651 déposée le 8 avril 1983 par la société MASCHINENFABRIKEN B. KRONE Gmbh, sur un dispositif comprenant un cadre tournant portant l'essieu avant de la remorque et monté à pivot sur une couronne de rotation, un timon d'attelage et de direction pivotant autour d'un axe fixe situé devant celui de la couronne de rotation, et un mécanisme de démultiplication : celui-ci permet de diriger ainsi d'abord la remorque vers l'extérieur de la courbe prise par le tracteur, mais cela augmente d'une part l'angle relatif entre les deux mobiles et le risque de collision entre eux, et d'autre part, le problème de stabilité de la remorque qui prend beaucoup de temps à se remettre en ligne à la fin de la courbe.

Enfin, on peut citer également divers systèmes d'attelage à articulation multiple, telle que la demande DE 3048118 du 20 décembre 1980, déposée par la société Alois KOBER KG sur "un attelage pour remorque à essieu unique" comportant un dispositif déplaçant le point effectif d'articulation en direction du centre de gravité du véhicule tracteur, grâce à deux bras articulés placés latéralement et réalisés sous forme de leviers coudés, constituant une chaine à quatre articulations ; de même la demande FR 26 27050 déposée le 15 février 1988 par les Constructions soudées - Sté COSNOI, décrit, à propos d'un appareil agricole, un attelage articulé en forme de compas relié à des tirants eux-mêmes sur des charnières à rotules.

Tous ces systèmes sont assez complexes et nécessitent des vérins de commande ou des engrenages motorisés devant supporter les efforts de traction : de plus, le suivi de la remorque par rapport à la trajectoire du tracteur n'est jamais vraiment optimisé et ne peut être que difficilement contrôlé ; de plus, après tout changement de direction, la remorque est longue à reprendre un suivi rectiligne de son tracteur ; ainsi, aucune solution n'est satisfaisante à ce jour.

En effet, le problème posé est de réaliser un dispositif d'attelage entre deux mobiles, tel qu'une remorque et un tracteur, afin que la trajectoire de la remorque suive au mieux celle du tracteur, et qu'en tout état de cause, lors des manoeuvres des changements de direction, il n'y ait pas d'interférence et de risque de collision entre les mobiles et qu'au mieux elle reprenne un suivi rectiligne de celui-ci, après toute courbe, en une distance très courte.

Une solution au problème posé est un dispositif de liaison entre deux mobiles dont l'un est une remorque attelée à l'autre qui est un tracteur, lequel dispositif comporte un timon articulé à ses deux extrémités, relié d'un côté à l'arrière du tracteur et de l'autre côté à l'avant de la remorque ; celle-ci repose et roule sur au moins trois roues, dont deux au plus sont dans des plans fixes parallèles à l'axe de la remorque et situées latéralement chacune de chaque côté de celle-ci, et une au moins est montée folle et libre en direction ; dans la présente invention au moins ladite articulation d'extrémité du timon sur le tracteur est montée sur tout moyen permettant de modifier volontairement l'angle que fait le timon avec l'axe du tracteur

Pour améliorer les évitements de collision, de préférence, ladite articulation d'extrémité du timon sur la remorque est montée sur un moyen identique à celui sur lequel est montée l'articulation de l'autre extrémité pour permettre de modifier volontairement l'angle que fait le timon avec l'axe de la remorque.

Dans un mode préférentiel de réalisation, ledit moyen de modification d'angle du timon par rapport aux axes des mobiles est un système de translation permettant un déplacement latéral, vers un côté ou l'autre du mobile concerné, de l'extrémité articulée du timon et correspondant à ce mobile.

Afin de pouvoir contrôler et optimiser ledit dispositif que l'on peut qualifier d'actif par opposition à la plupart des systèmes d'attelage actuels qui sont passifs, le dispositif suivant l'invention comprend de préférence à chaque extrémité du timon un capteur de mesure des angles que fait le timon avec les axes des mobiles, et une unité de calcul embarquée sur l'un de ces mobiles qui est programmée pour commander les moyens de modification de ces angles, en fonction de la trajectoire du tracteur, pour obtenir une trajectoire voulue de la remorque.

Dans l'application principale, citée précédemment, pour laquelle le tracteur est un robot qui suit une trajectoire apprise ou commandée et/ou déduite de diverses informations extérieures, ladite unité de calcul, ayant alors en mémoire la prévision de ladite trajectoire, commande par anticipation lesdits moyens de modification d'angle du timon.

Ainsi il peut être déterminé, suivant le dispositif de l'invention, qu'au moins une partie donnée de la surface projetée au sol de la remorque recouvre et passe en permanence au dessus de la surface du sol sur laquelle est déjà passée une partie donnée de la surface projetée au sol du tracteur.

Simultanément, ou suivant un autre objectif de l'invention, la trajectoire de la remorque peut être alors déterminée, grâce au dispositif suivant l'invention telle que si elle s'écarte de celle du tracteur lors de changement de direction de celui-ci, ce soit vers l'extérieur de la courbe de changement de direction, et que les trajectoires des deux mobiles se rejoignent au mieux au point où le tracteur a repris une trajectoire rectiligne.

Le résultat est de nouveaux dispositifs de liaison pour optimiser la trajectoire d'une remorque attelée derrière un tracteur répondant aux quatre objectifs et avantages suivants :

– optimisation de trajectoire de façon à limiter les zones de non recouvrement du tracteur et de la remorque
– absence d'interférence entre les deux engins ou mobiles pendant les manoeuvres de changement de direction
– optimisation du temps nécessaire à la remise de la remorque sur une trajectoire rectiligne après un changement de direction
– simplicité de conception et de mise en oeuvre du dispositif de liaison.

Ces avantages sont obtenus, en effet, grâce à la conception de timon actif qui est l'une des caractéristiques principales de l'invention ; les possibilités d'actionner volontairement le timon suivant une direction voulue sont d'autant plus renforcées par des moyens de plus en plus complets, que l'objectif et le travail sont souhaités plus précis. En effet, avec les timons passifs, tels que rappelés précédemment, il n'y a pas de recouvrement à proprement parlé de trajectoire dans les virages, la reprise de trajectoire du tracteur par la remorque ne se fait que sur une distance égale souvent à plus de trois fois la longueur du tracteur et quand on veut réduire celle-ci et éviter de trop couper les courbes, les systèmes dans lesquels les timons sont réduits, comportent des risques de collision.

Un timon actif, suivant la présente invention avec motorisation latérale du point d'attelage du tracteur et de la remorque assurent les améliorations suivantes et des essais l'ont prouvé :

– la remorque est tirée d'abord lors de changement de direction à l'extérieur du virage par le déplacement des points d'attelage ; les interférences et collisions sont ainsi évitées même avec des distances entre les roues et les points d'attelage faibles.

– la remorque est artificiellement remise ensuite dans la trajectoire du tracteur par le déport latéral : on arrive alors à rattraper la trajectoire après une longueur plus courte que sans motorisation active d'orientation et de déplacement des points d'articulation des timons.

Une amélioration supplémentaire est obtenue avec un timon à position programmée à partir de l'intelligence d'un robot et/ou par apprentissage. En effet, dans l'application principale envisagée, le robot tracteur pouvant être un robot de nettoyage permettant de suivre une trajectoire donnée connue et/ou apprise et/ou programmée et/ou télécommandée, telle que toute la surface à nettoyer soit effectivement parcourue en un minimum de passages et de manoeuvres : la remorque peut être alors une porteuse d'outils de nettoyage complémentaire devant absolument passer, lors du même passage, sur les mêmes endroits que ceux traités par les outils du robot-tracteur ; le dispositif de liaison suivant l'invention permet d'obtenir cet objectif.

On pourrait citer alors d'autres avantages dans la présente invention, mais ceux cités ci-dessus en montrent déjà suffisamment pour en prouver la nouveauté et l'intérêt.

La description et les dessins ci-après représentent des exemples de réalisation de l'invention et n'ont aucun caractère limitatif. D'autres réalisations sont possibles à partir des revendications qui précisent la portée et l'étendue de cette invention, en particulier en trouvant d'autres applications que celles envisagées comme applications principales dans les robots de nettoyage. En particulier, on peut citer la réalisation de trains de remorques de plate-formes de transport dans des ateliers encombrés : on peut envisager de mettre plusieurs remorques les unes derrière les autres, chacune suivant exactement la trajectoire du tracteur de référence, celui-ci pouvant alors circuler entre des rayonnages encombrés et proches les uns des autres. De même, ceci peut être envisagé dans des robots de nettoyage comportant des remorques successives, également pouvant passer sur la trajectoire du robot tracteur.

La figure 1 est une vue de dessous schématique d'un tracteur et de sa remorque.

La figure 2 est un exemple de réalisation de dispositif de liaison d'attelage.

La figure 3 est une autre exemple de réalisation d'un dispositif de liaison d'attelage.

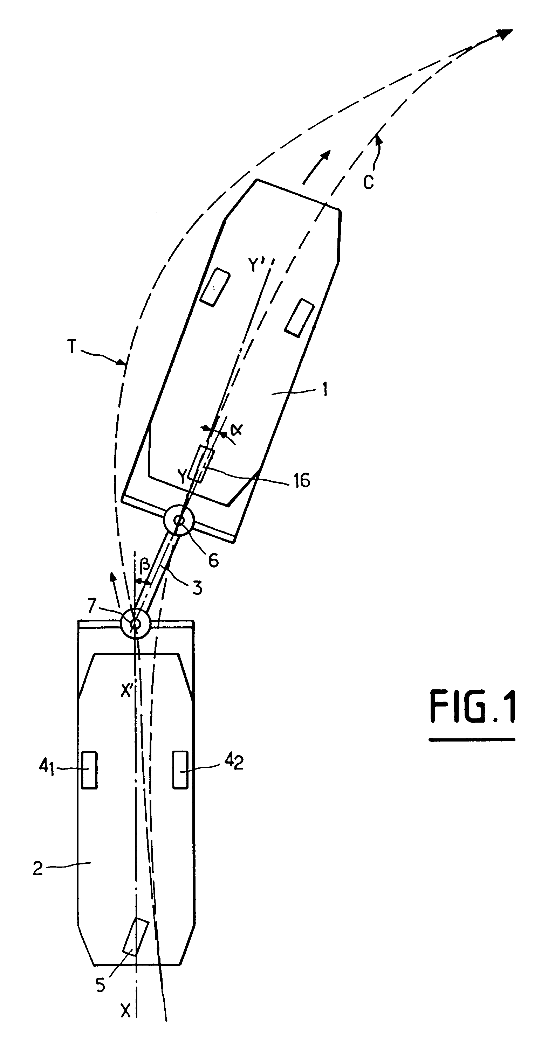

La figure 1 est une vue de dessous figurant schématiquement un tracteur 1 tirant une remorque 2 par l'intermédiaire d'une liaison ou attelage constitué d'un timon 3, fixé par des articulations respectivement 6 au tracteur 1 et 7 à la remorque 2 : celle-ci repose et roule sur au moins trois roues 4 et 5 dont deux $4_1$ et $4_2$ au plus sont dans des plans fixes parallèles à l'axe XX' de cette remorque 2 et situées latéralement chacune de chaque côté de celle-ci ; une au moins de ces roues 5 est montée folle et libre en direction : sur la figure, celle-ci est représentée dans l'axe XX' de la remorque mais dans d'autres réalisations, on peut envisager deux roues folles de ce type placées latéralement comme les roues $4_1$ et $4_2$ ou peuvent être situées l'une à l'avant et l'autre à l'arrière. Dans d'autres réalisations, on peut envisager que toutes les roues 4, 5 de la remorque sont montées folles en direction et en rotation.

Le tracteur 1 qui peut être un robot, de type robot de nettoyage, mais qui peut être également un tracteur routier, ou un tracteur de remorque de charges dans un atelier, ou autres, suit une trajectoire C, commandée ou programmée, grâce à une ou des roues directrices 16 et des roues motrices de tout type connu. La remorque 2 tirée ainsi par le timon 3 suit une trajectoire T qui, si les articulations 6 et 7 étaient libres, comme dans la plupart des systèmes existants, serait une trajectoire coupant l'intérieur de la courbe C et non pas passant à l'extérieur comme indiqué dans cette figure 1.

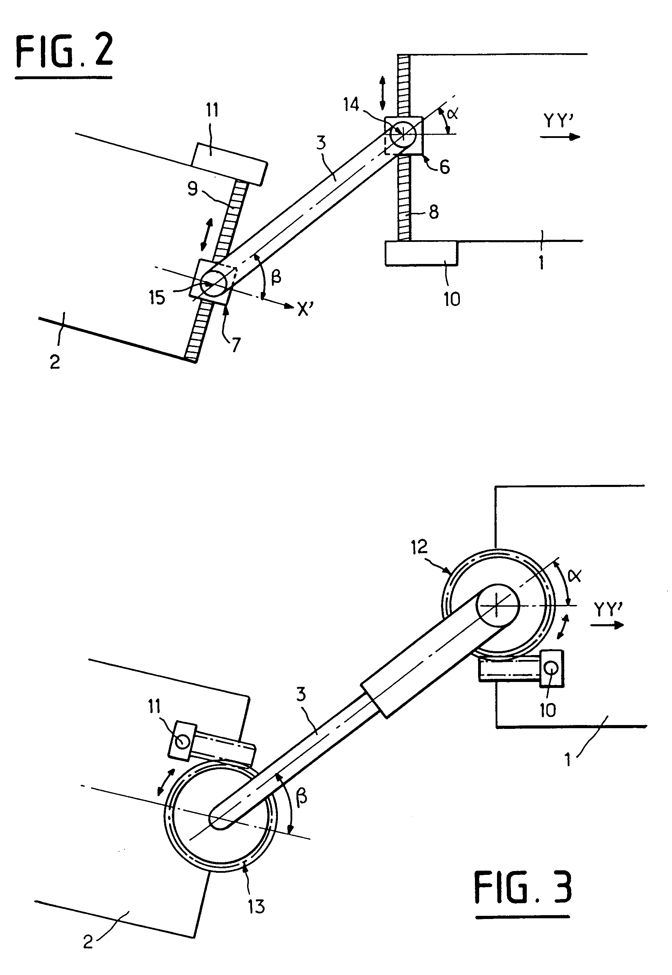

Pour obtenir la trajectoire T voulue en fonction de la trajectoire C commandée, le dispositif selon l'invention comprend au moins ladite articulation 6 d'extrémité du timon 3 sur le tracteur 1, montée sur tous moyens 8,12 représentés sur les figures 2 et 3 permettant de modifier volontairement l'angle α que fait le timon 3 avec l'axe YY' du tracteur 1.

Ce type de dispositif, au moins au niveau de l'articulation 6 du tracteur 1 permet de donner un déport latéral optimum grace à cet angle α qui est calculé et imposé par le dispositif, et qui oblige la remorque à mieux suivre les traces du tracteur 1 et à rejoindre ainsi la trajectoire C du tracteur le plus rapidement après toute courbe éventuelle de cette trajectoire.

De plus, ladite articulation 7 d'extrémité du timon 3 sur la remorque 2 peut être montée sur des moyens 9,13 identiques à celui sur lequel est monté l'articulation 6 de l'autre extrémité pour permettre de modifier volontairement l'angle β que fait le timon 3 avec l'axe XX' de la remorque 2. Ceci permet de déporter encore plus, si nécessaire, la remorque dans les virages dans un but d'éviter des collisions avec le tracteur. Deux réalisations spécifiques sont décrites dans les figures 2 et 3 et chacune permet des guidages différents. Celle représentée dans la figure 2, sera préférentiellement décrite et revendiquée dans le cadre des objectifs de la présente invention.

La figure 2 représente ainsi des moyens de modification d'angles du timon 3 par rapport aux axes XX'

et YY' des mobiles 1 et 2, comprenant chacun un système 8,9 de translation permettant un déplacement latéral, vers un côté ou l'autre du mobile concerné, de l'extrémité articulée correspondante du timon 3.

Ce système de translation 8,9 comprend d'une manière préférentielle, solidairement au mobile concerné, une vis sans fin tournant sur elle-même et un entraînement motorisé 10,11 à l'une de ces extrémités ; solidairement de l'extrémité correspondante du timon 3, l'articulation 6,7 comprend une pièce percée et filetée pour coopérer avec ladite vis sans fin pour être entraînée d'un côté ou l'autre du mobile suivant le sens de rotation de celle-ci. Pour obtenir les objectifs suivant l'invention, le mouvement du système de translation 9 de la remorque 2 doit être a contrario de celui 8 du tracteur 1. Pour obtenir ainsi la trajectoire T voulue de la remorque 2 par rapport à la trajectoire C du tracteur 1, des consignes sont données aux motorisations 10 et 11 pour faire effectuer des mouvements de translation aux pièces d'articulation 6,7 par rapport aux vis sans fin 8 et 9, de façon à obtenir des angles α donnés du timon 3 avec le tracteur 1 et β avec la remorque 2. Pour contrôler cela, le dispositif peut comprendre à chaque extrémité de ce timon 3 un capteur de mesure 14,15 des angles α β que fait le timon 3 avec les axes des mobiles YY' et XX' respectivement tels que définis ci-dessus, et une unité de calcul embarquée sur l'un de ces mobiles qui est programmée pour commander les moyens 8,9 de modification de ces angles, en fonction de la trajectoire C du tracteur 1 pour obtenir une trajectoire T voulu de la remorque 2.

Ceci peut être obtenu grâce à un automatisme à séquence qui maintient le déport des points d'articulation 6 et 7 respectifs du timon 3 par rapport au mobile concerné, déclenché à partir d'un seuil donné et calculé, en fonction de l'angle α du tracteur et du timon, et β de la remorque et du timon, et au retour à zéro puisque les articulations 6 et 7 correspondantes sont montées libres par rapport au timon 3 et aux points d'ancrage sur les dispositifs de translation 8,9 : ceci permet donc le guidage de la remorque 2 d'une façon souple et contrôlée en permanence.

Ainsi si le tracteur 1 est un robot qui suit une trajectoire C apprise ou commandée ou déduites de différentes informations extérieures, ladite unité de calcul ayant alors en mémoire la prévision de ladite trajectoire C peut commander par anticipation lesdits moyens 8 et 9 de modification d'angles du timon 3 : ceci peut permettre en particulier à ce que la trajectoire C de la remorque soit telle qu'au moins une partie donnée de la surface projetée au sol de la remorque 2 recouvre et passe en permanence au dessus de la surface du sol sur laquelle est déjà passée une partie donnée de la surface projetée au sol du tracteur 1. Ceci est surtout intéressant et nécessaire dans les cas d'application aux opérations de nettoyage mais également dans les cas de manoeuvres dans des endroits encombrés.

D' autres possibilités de ce contrôle et positionnement des points de traction et d'articulation du timon sont que, lorsque la trajectoire T de la remorque 2 est telle que si elle s'écarte de celle C du tracteur 1 lors de tous changements de direction de celle-ci, ce soit alors vers l'extérieur, et non vers l'intérieur comme dans les cas actuels et que les trajectoires C et T se rejoignent en un point et au mieux au point où le tracteur 1 a repris une trajectoire rectiligne.

Des essais ont pu être faits sur des manoeuvres apprises et modélisées mathématiquement, grâce à tout moyen connu par un homme du métier et tout homme de l'art, et ont permis d'obtenir effectivement les résultats souhaités quelques soient les objectifs fixés définis précédemment grâce aux moyens et aux dispositifs suivant l'invention.

La figure 3 représente un autre dispositif suivant l'invention dans lequel on envisage un timon 3 de longueur variable lié en rotation au tracteur 1 et à la remorque 2 par des secteurs dentés 12 et 13, motorisés par des systèmes de rotation volontaire 10 et 11 solidaires chacun respectivement du tracteur 1 et de la remorque 2.

Cette solution bloque et supprime tout degré de liberté entre la remorque et le tracteur contrairement au dispositif de la figure 2 puisqu'en fait les deux mobiles d'origine qui forment un système articulé à un degré de liberté sont transformés en un seul mobile à géométrie variable.

Lesdits moyens de modification des angles du timon 3 par rapport aux trajectoires C et T sont alors des systèmes 12,13 de rotation de l'extrémité concernée permettant d'orienter directement le timon 3 des angles voulus α et β Ces systèmes 12,13 de rotation d'extrémité du timon 3 comprennent également un secteur denté, solidaire de chaque extrémité et un entraînement motorisé 10,11, du secteur solidaire du mobile concerné. Toutes les caractéristiques des moyens de mesure d'angles , d'unité de calcul et de suivi de trajectoire imposée à la remorque 2, tels que décrits dans le dispositif de la figure 2, s'appliquent et sont utilisées dans ce dispositif de la figure 3, sauf bien sûr en ce qui concerne les moyens pour y parvenir.

Cette solution de la figure 3 présente des inconvénients d'avoir plus d'organes à motoriser et à asservir et la conception d'un timon de longueur variable est plus compliquée, comme dit précédemment, que celle d'une simple barre d'attelage et consomme donc plus d'énergie. Par contre, cette solution permet de déterminer un programme d'apprentissage qui fasse que la remorque passe exactement dans les traces du tracteur, même si cela est au prix d'une dépense d'énergie supplémentaire.

En effet, pour arriver à ce que la remorque 2passe exactement sur les traces du tracteur 1, il est nécessaire que même le tracteur arrêté, on puisse mouvoir le timon 3 et les articulations pour orienter la remorque 2 dans la bonne direction.

Il convient donc de motoriser davantage le timon 3 pour pouvoir déplacer la masse de la remorque en plus de sa simple traction.

Dans les différentes figures, nous n'avons pas représenté de vue dans le plan vertical, dans lequel il aurait fallu figurer les articulations 6 et 7 d'extrémités du timon 3 permettant d'absorber les efforts verticaux et les déplacements verticaux de la remorque 2 par rapport au tracteur 1. Ceci étant réalisable de toute manière connue pour un homme de l'art n'est donc ni décrit, ni particulier à la présente invention. Tout système connu peut être utilisé en ce cas. De même, au niveau de l'énergie nécessaire au tracteur et/ou à la remorque, ceci peut être réalisé en fonction de tout ce qui existe à l'heure actuelle et n'est donc pas spécifique, ni décrit dans la présente description.

## Revendications

1. Dispositif de liaison entre deux mobiles dont l'un est une remorque (2) attelée à l'autre qui est un tracteur (1), lequel dispositif comporte un timon (3) articulé à ses deux extrémités (6,7), relié d'un côté à l'arrière du tracteur (1) et de l'autre côté à l'avant de la remorque (2), celle-ci reposant et roulant sur au moins trois roues (4,5), dont deux ($4_1$ et $4_2$) au plus sont dans des plans fixes parallèles à l'axe (X,X') de la remorque (2) et situées latéralement chacune de chaque côté de celle-ci, et une au moins (5) est montée folle et libre en direction, caractérisé en ce que ladite articulation (6) d'extrémité du timon (3) sur le tracteur (1) est montée sur tout moyen (8,12) permettant de modifier volontairement l'angle $\alpha$ que fait le timon (3) avec l'axe (Y,Y') du tracteur (1) et que ladite articulation (7) de l'autre extrémité du timon (3) sur la remorque (2) est montée sur tout moyen (9, 13) pour permettre de modifier volontairement l'angle $\beta$ que fait le timon (3) avec l'axe (X X') de la remorque (2).

2. Dispositif de liaison suivant la revendication 1, caractérisé en ce que les deux dits moyens (8, 12) montés sur le tracteur et (9, 13) montés sur la remorque pour permettre de modifier volontairement les angles $\alpha$ et $\beta$ que fait le timon (3) avec les axes respectifs (Y Y') du tracteur (1) et (X X') de la remorque (2) sont identiques.

3. Dispositif de liaison suivant l'une quelconque des revendications 1 et 2 caractérisé en ce que ledit moyen de modification d'angle du timon (3) par rapport aux axes des mobiles (1,2) est un système (8,9) de translation permettant un déplacement latéral vers un côté ou l'autre du mobile concerné, de l'extrémité articulée du timon (3) et.correspondant à ce mobile

4. Dispositif de liaison suivant la revendication 3 caractérisé en ce que le système de translation (8,9) comprend, solidairement au mobile concerné, une vis sans fin tournant sur elle-même et un entraînement motorisé (10,11) à l'une de ses extrémités et solidairement de l'extrémité correspondante du timon (3) une pièce de l'articulation (6,7), percée et filetée pour coopérer avec ladite vis sans fin pour être entraînée d'un côté ou de l'autre du mobile suivant le sens de la rotation de celle-ci.

5. Dispositif de liaison suivant l'une des revendications 1 et 2 caractérisé en ce que ledit moyen de modification d'angle du timon (3) par rapport aux trajectoires (C,T) est un système (12,13) de rotation de l'extrémité concernée permettant d'orienter directement le timon (3) de l'angle voulu, lequel timon (3) est alors de longueur variable.

6. Ce dispositif de liaison suivant la revendication 5 caractérisé en ce que ledit système (12,13) de rotation d'extrémité du timon (3) comprend un secteur denté solidaire de cette extrémité, et un entraînement motorisé (10,11) de ce secteur, solidaire du mobile concerné.

7. Dispositif de liaison suivant l'une quelconque des dispositions 1 à 6, caractérisé en ce qu'il comprend à chaque extrémité du timon (3) un capteur (14,15) de mesure des angles ($\alpha,\beta$) que fait le timon (3) avec les axes des mobiles (1,2), et une unité de calcul embarquée sur l'un de ces mobiles qui est programmée pour commander les moyens (8,12) de modification de ces angles en fonction de la trajectoire (C) du tracteur pour obtenir une trajectoire (T) voulue de la remorque.

8. Dispositif de liaison suivant la revendication 7 caractérisé en ce que le tracteur (1) est un robot qui suit une trajectoire (C) apprise ou commandée et/ou déduite de diverses informations extérieures, et ladite unité de calcul ayant alors en mémoire la prévision de ladite trajectoire (C) commande par anticipation lesdits moyens (8,12) de modification d'angle du timon (3).

9. Dispositif de liaison suivant la revendication 8, caractérisé en ce que la trajectoire (C) est telle qu'au moins une partie donnée de la surface projetée au sol de la remorque(2) recouvre et passe en permanence au dessus de la surface du sol sur laquelle est déjà passée une partie donnée de la surface projetée au sol du tracteur (1).

10. Disposition de liaison suivant l'une quelconque des revendications 8 et 9 caractérisé en ce que la trajectoire (T) de la remorque (2) est telle que si elle s'écarte de celle (C) du tracteur (1) lors de changement de direction de celui-ci, ce soit vers l'extérieur et que les trajectoires (C,T) se rejoignent au mieux au point où le tracteur (1) a repris une trajectoire rectiligne.

FIG.1

# FIG. 2

# FIG. 3

Office européen
des brevets

**RAPPORT DE RECHERCHE EUROPEENNE**

Numero de la demande

EP    92 43 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 153 132 (L. BIEDEBACH) <br> * colonne 1, ligne 56 - colonne 3, ligne 19; figures * <br> --- | 1,3-4 | B60D1/42 <br> B62D13/00 <br> A47L9/28 |
| A | US-A-2 823 929 (J. PASQUALI) <br> * revendications; figures * <br> --- | 1,3-4 | |
| A | FR-A-2 589 812 (B. SENELET) <br> * abrégé; figures * <br> --- | 1-2 | |
| A | US-A-1 842 129 (E. THOMAS) <br> * le document en entier * <br> --- | 1,5-6 | |
| A | ENGINEERING <br> vol. 229, no. 6, Juin 1989, LONDON GB <br> CIRCLE 201: 'robot vehicle copes with the cleaning' <br> --- | 7-8 | |
| A | DE-C-3 831 492 (A. OPEL) <br> * abrégé; figures * <br> ----- | 7 | |
| | | | **DOMAINES TECHNIQUES RECHERCHES (Int. Cl.5)** <br><br> B60D <br> B62D <br> A47L |

Le présent rapport a été établi pour toutes les revendications

| Lieu de la recherche <br> LA HAYE | Date d'achèvement de la recherche <br> 23 AVRIL 1992 | Examinateur <br> GONZALEZ-GRANDA C. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P0402)